# EUROPÄISCHE PATENTSCHRIFT

(11) **EP 0 658 527 B1**
(45) Veröffentlichungstag und Bekanntmachung des Hinweises auf die Patenterteilung: **03.09.1997**
(21) Anmeldenummer: 94119580.2
(22) Anmeldetag: 10.12.1994
(51) Int. Cl.: C04B 26/14, C04B 28/26

(54) **Verfahren zur Herstellung einer Giesskeramik**
Process for making a castable ceramic
Procédé de fabrication d'un céramique coulable

(30) Priorität: 17.12.1993 DE 4343121
(43) Veröffentlichungstag der Anmeldung: 21.06.1995
(73) Patentinhaber: ABB PATENT GmbH, 68309 Mannheim (DE)
(72) Erfinder: Weddigen, Gert, Dr., D-69121 Heidelberg (DE); Szasz, Paul, D-69123 Heidelberg (DE); Kranzmann, Axel, Dr., D-70182 Stuttgart (DE)
(74) Vertreter: Rupprecht, Klaus, Dipl.-Ing.

(56) Entgegenhaltungen:
- WO-A-92/07369
- DE-A- 2 810 773
- GB-A- 1 140 383
- US-A- 3 943 217
- US-A- 4 663 363
- PATENT ABSTRACTS OF JAPAN vol. 009 no. 140 (E-321) ,14.Juni 1985 & JP-A-60 021506 (AISHIN SEIKI KK) 2.Februar 1985,

## Beschreibung

Die Erfindung bezieht sich auf ein Verfahren zur Herstellung einer Gießkeramik gemäß dem Oberbegriff des Patentanspruches 1.

Gießkeramiken finden bei der Fertigung von elektrischen Isolationen eine Anwendung. Sie sind jedoch auch für die Herstellung von Bauteilen wie Gehäusen und Schaltern geeignet. Bei der Gießkeramik handelt es sich um eine niederviskose Mischung aus einer hochalkalischen kalium- oder natriumhaltigen Wasserglasphase und einem alumosilikatischen Pulvergemisch, das Silizium und Aluminium in einem Verhältnis aufweist, dessen Wert zwischen 2 und 5 liegt. Die Gießkeramik bindet bei Temperaturen unter 100°C innerhalb von 2 bis 6 Stunden in einer Polykondensationsreaktion zum Festkörper ab. Bei der Abbindereaktion wird bis zu 20 Gew% Wasser abgespalten, das in einem Trocknungsprozeß bei maximal 200°C entfernt werden muß. Die Gießkeramik ist anorganisch und kann nach der Aushärtung und einer Trocknung dauerhaft hohen Temperaturen ausgesetzt werden. Von Nachteil bei der Trocknung ist jedoch, daß das abgespaltene Wasser eine durchgehende offene Porosität von bis zu 30% hinterläßt. In den offenen Poren kann sich auf Grund von Kapillarwirkungen und der hykroskopischen Eigenschaften der Oberfläche, welche die Gießkeramik aufweist, bei feuchter Umgebung Wasser anlagern, das zu einer Verschlechterung der Isolationseigenschaften führt. Die durchgehende Porosität verringert die Durchschlagfestigkeit der Gießkeramik, wodurch ihre Eigenschaften als Isolator gemindert wird.

In der DE-A-4 110 223 wird vorgeschlagen, zur Beseitigung der Porosität die Poren mit einer Flüssigkeit auszufüllen, die anschließend ausgehärtet wird. Dieser Prozeß ist relativ aufwendig und bei großen Bauteilen nur schwer durchzuführen.

Aus der US-A-3 943 217 ist ein Isolationskörper bekannt, der aus einem anorganischen Pulver und einem Binder hergestellt ist. Das Pulver besteht aus Kalkspat, Ferrit oder Titanit. Als Binder kann ein Epoxidharz verwendet werden.

In der GB-A-1 140 383 ist eine Epoxidharz-Keramik beschreiben. Für die Herstellung dieser Harzkeramik werden ein heißes Epoxidharz und ein heißer Füllstoff miteinander vermischt. Als Füllstoff wird ein keramisches Material in Form von Aluminiumoxid, Kalziumoxid, Magnesiumoxid, Titanoxid oder Zirkoniumoxid verwendet.

Der Erfindung liegt die Aufgabe zugrunde, ein Verfahren zur Herstellung einer Gießkeramik aus Wasserglas und einem silizium- und aluminiumhaltigen Pulver aufzuzeigen, bei der die Porosität vernachlässigbar klein ist und deren Temperaturbeständigkeit größer 150°C ist.

Diese Aufgabe wird erfindungsgemäß durch die Merkmale des Patentanspruches 1 gelöst.

Gegenüber organischen Kunststoffen, die als Isolatoren oder zur Fertigung von Gehäusen verwendet werden, bietet die Gießkeramik den Vorteil, der höheren Temperaturbeständigkeit, der Nichtbrennbarkeit sowie der Resistenz gegen UV-Strahlung, wobei weiterhin die bei Kunststoffen üblichen Fertigungsverfahren angewendet werden können. Gegenüber gesinterten Keramiken weist die Gießkeramik den Vorteil auf, daß auf die hohen Sintertemperaturen verzichtet werden kann, so daß ein geringer Energiebedarf für die Herstellung erforderlich ist. Ferner erlaubt die Fertigung eine wesentlich höhere Meßgenauigkeit, da beim Härten eine im Vergleich nur sehr geringe Schrumpfung von weniger als 1% auftritt. Erfindungsgemäß wird der Gießkeramik vor dem Aushärten ein vernetzungsfähiges, dünnflüssiges organisches Harz, vorzugsweise ein Epoxidharz auf der Basis von Bisphenol-A beigemischt. Das Mischungsverhältnis beträgt 70 Gew% Gießkeramik und maximal 30 Gew% Epoxidharz bezogen auf das Gesamtgewicht der Gießkeramik. Weitere Zusätze in der Größenordnung kleiner/gleich 5% können vorzugsweise zugegeben werden.

Diese sollen unter anderem eine Beschleunigung der Vernetzung, eine Verbesserung der Verarbeitbarkeit und eine Verbesserung der Feuchtigkeitsbeständigkeit bewirken. Für die Beschleunigung der Vernetzung werden vorzugsweise tertiäre Amine, beispielsweise Dimethyl-Benzyl-Amine verwendet. Eine verbesserte Verarbeitbarkeit der Gießkeramik läßt sich durch die Zusätze von mehrwertigen Alkoholen bewirken. Hierfür eignet sich besonders Glyzerin. Die Feuchtigkeitsbeständigkeit wird durch den Zusatz von lösungsmittelfreiem Silikonharz erzielt. Es hat sich gezeigt, daß es von Vorteil sein kann, 25 bis 30 Gew% des obenerwähnten Epoxidharzes durch lösungsmittelfreies Silikonharz zu ersetzen. Hiermit kann eine Gießkeramik hergestellt werden, die eine sehr hohe Temperaturbeständigkeit und eine starke Hydrophobierung aufweist, auch dann noch, wenn die Porosität der Gießkeramik über 10% beträgt. Die Gießkeramik wird zur Fertigstellung nach dem Vermischen mit den möglichen Zusätzen einem Formgebungsprozeß bei Raumtemperatur unterzogen und daraufhin ausgehärtet. Die Aushärtung erfolgt durch Wärmebehandlung 2 bis 6 Stunden lang bei 80°C und anschließend 8 bis 15 Stunden lang bei 160°C. Die Gießkeramik bindet wie alle bereits bekannten Gießkeramiken ab, während die Epoxidharzketten sowohl untereinander als auch zum Teil mit der Oberfläche der Gießkeramik vernetzen. Die Vernetzung des Epoxidharzes erfolgt durch Polyaddition der Makromoleküle dieses Harzes. Die Vernetzung wird durch die als Katalysator dienende Gießkeramik bewirkt. Das vernetzte Epoxidharz bildet ein zusammenhängendes Netzwerk in der Gießkeramik, das die durchgehende offene Porosität verschließt und zum größten Teil ausfüllt. Das bei der Kondensation der Gießkeramik anfallende Wasser wird zum Teil bei der Harzvernetzung verbraucht. Der Rest wird nach außen abgeschieden. Die so hergestellte Gießkeramik weist eine offene Porosität auf, die unter 15% liegt. Je nach Verarbeitungstechnik kann sie kleiner als 2% sein. Die erfindungsgemäße Gießkeramik kann bis zu Temperaturen von 250° bis 300°C dauerbelastet werden.

Die Durchschlagfestigkeit ist größer als 6 kV/mm. Sie beträgt meistens 8 bis 15 kV/mm. Der spezifische Widerstand beträgt bei Raumtemperatur 10¹⁵ Ohm x cm. Der elektrische Verlustfaktor beträgt bei 50 Hz 0,006 bis 0,02. Die erfindungsgemäße Gießkeramik läßt sich vielseitig weiterverarbeiten. Sie kann zu Bauteilen vergossen, gespritzt oder gepreßt werden. Zusätzlich kann sie mit Fasern verstärkt und zu Laminaten verarbeitet werden. Die erfindungsgemäße Gießkeramik eignet sich besonders zur Herstellung von Abstandhaltern und Isolationen für Transformatoren und Schaltern, zur Fertigung von Bauteilen für die Mittel- und Niederspannungstechnik, sowie zur Fertigung von Gehäusen, Funkenkammern, Brandschutzeinrichtungen, Hausisolationen, Verteilerdosen, Steckdosen, Mittelspannungsschaltern und Fassungen. Sie kann zudem als Ersatz für herkömmliche Werkstoffe wie Epoxidharze, Polyester oder Polyurethan oder gesinterte Keramiken, wie Porzellan, verwendet werden.

Weitere erfindungswesentliche Merkmale sind in den Unteransprüchen gekennzeichnet.

Zur Herstellung der Gießkeramik wird von einer niederviskosen Mischung bestehend aus 40 Gew% Wasserglas ausgegangen, das 25 Gew% K₂O und 16 Gew% SiO₂ sowie einen ph-Wert von 15 und eine Viskosität von 15 mPas aufweist. Diesem Wasserglas werden 60 Gew% einer Pulvermischung zugesetzt. Dieses enthält SiO₂ und Al₂O₃ sowie eine kristalline Na₂SiF₆-Phase mit einem Anteil von 20%. Das Verhältnis SiO₂:Al₂O₃ wird zwischen 4 und 6 gewählt. Die Korngröße des Pulvers beträgt 1 bis 10 µm. Das Gemisch aus Pulver und Wasserglas wird mittels Rühren und Kühlen auf 10°C hergestellt. Um eine Gießkeramik herzustellen, deren Porosität unter 15% liegt, werden dem obenbeschriebenen Gemisch aus Wasserglas und Pulver 17 Gew% Epoxidharz auf der Basis von Bisphenol-A beigemischt. Um eine Gießkeramik zu erhalten, die eine Temperaturbeständigkeit bis zu 300°C aufweist, werden diesem Gemisch zusätzlich 5 Gew% eines lösungsmittelfreien Silikonharzes zugesetzt. Die Angaben bezüglich der Gew% beziehen sich auf das Gesamtgewicht der Gießkeramik. Die noch nicht ausgehärtete Gießkeramik kann nun zur Fertigung von Bauteilen verwendet werden, die beispielsweise gegossen werden. Hierfür wird diese Gießkeramik in eine Form gegossen und 4 Stunden bei 80°C ausgehärtet. Da nach dieser ersten Wärmbehandlung der Epoxidharzanteil noch teilweise flüssig ist, schließt sich eine weitere Temperaturbehandlung bei 160°C während 8 Stunden an. Nach dieser zweiten Wärmebehandlung ist das Bauteil vollkommen trocken und weist eine offene Porosität von nur noch 11% auf.
Die noch flüssige Gießkeramik mit einem Zusatz an Epoxidharz kann auch zum Spritzgießen verwendet werden. Hierfür werden ihr zusätzliche Füllstoffe beigemischt. Als Füllstoffe können Oxidkeramikpulver in Form von Aluminiumoxid, Zirkoniumdioxid, Magnesiumoxid, Siliziumdioxid oder Berylliumoxid sowie Nichtoxidpulver in Form von Aluminiumnitrid, Siliziumnitrid, Siliziumcarbid, Wolframcarbid, Borcarbid, Titancarbid oder Molybdäncarbid mit einer mittleren Korngröße zwischen 1 und 500 µm eingesetzt werden. Als Füllstoffe können auch Kurzfasern beigemischt werden, deren Länge zwischen 0,15 und 50 mm beträgt, und die aus Glas, Aluminiumdioxid, Siliziumdioxid, Kohlenstoff oder Siliziumcarbid gefertigt sind. Hiermit lassen sich die Eigenschaften wie Viskosität, Festigkeit, Härte, Durchschlagfestigkeit variieren und die Porosität verringeren.
Durch Einrühren von 28 Gew% Aluminiumdioxidpulver und 28 Gew% Fasern aus Aluminiumdioxid in 44% Gew% noch flüssige Gießkeramik mit einem Zusatz an Epoxidharz kann ebenfalls eine Spritzpreßmasse hergestellt werden. Das Aluminiumdioxidpulver weist eine mittlere Korngröße von 18 µm. Die Fasern aus Aluminiumdioxid haben eine Länge von 0,5 mm und einem Durchmesser von 0,01 mm. Alles wird unter Kühlung auf 10°C gründlich vermischt. Die so erhaltene pastöse Masse wird in eine Kolbenpresse (hier nicht dargestellt) gefüllt und mit Druck in eine evakuierte Form eingepreßt. Die Form wird 5 Stunden lang einer Wärmebehandlung bei 80°C unterzogen. Anschließend wird das Bauteil der Form entnommen und einer weiteren Wärmebehandlung bei 160°C 10 Stunden lang unterzogen. Das fertige Bauteil hat eine offene Porosität von nur noch 12%.

Zur Herstellung von Platten wird von der eingangs beschriebenen Gießkeramik mit einem Epoxidharzzusatz ausgegangen, wobei zusätzlich 33 Gew% lösungsmittelfreies Silikonharz zugemischt werden. Das Material wird anschließend in eine Plattenform gegossen und bei 80°C 4 Stunden lang ausgehärtet. Anschließend wird die Platte der Form entnommen und mit einer Aufheizgeschwindigkeit von 1°C bis 2°C pro Minute auf 200°C aufgeheizt und daraufhin 2 Stunden lang bei 200°C getrocknet. Eine so hergestellte Platte weist eine offene Porosität von 12% auf und ist zudem wasserabweisend. Sie kann in Schaltern oder Funkenkammern als lichtbogenfeste Abschirmung bis über 300°C genutzt werden.

Mit der erfindungsgemäßen Gießkeramik können auch Laminate hergestellt werden. Hierfür wird von der flüssigen Gießkeramik mit dem oben angegebenen Epoxidharzanteil ausgegangen. Mit diesem noch flüssigen Gießkeramikgemisch werden beispielsweise 8 Glasfasermatten getränkt, die eine Abmessung von 10 x 10 x 0,02 cm aufweisen. Die durchtränkten Glasfasermatten werden aufeinandergelegt und zwischen 2 Stahlplatten gepreßt. Unter ständiger Pressung wird das Laminat in 4 Stunden bei 80°C ausgehärtet und anschließend bei 160°C 10 Stunden lang nachgetrocknet. Das so hergestellte Laminat weist eine Dicke von 2 mm auf und eine offene Porosität von 15%. Es kann als Isolatorplatte, als Abstandhalter oder als Gehäuseelement bzw. Abdeckung eines Gehäuses verwendet werden.

Desweiteren kann die Gießkeramik zur Ausbildung von Isolatorrohren oder isolierenden Schichten von Transformatoren verwendet werden. Hierfür werden Glasfaserrovings mit dem obenbeschriebenen flüssigen Gießharz getränkt, das neben dem Epoxidharz noch weitere Zusätze enthalten kann. Anschließend wird das Roving in mindestens 5 Lagen um einen Dorn gewickelt. Jede Lage weist vorzugsweise eine Dicke von 0,1 bis 0,4 mm auf. Auf diese erste Isolationsschicht wird eine den Transformator bildende Drahtwicklung aufgebracht, an die sich wieder eine Isolationsschicht anschließt. Um die Porosität der Gießkeramik noch weiter zu verringern, besteht die Möglichkeit, jede aufgebrachte Lage mittels einer Heizvorrichtung (hier nicht dargestellt) vorzuhärten. Die auf den Dorn aufgewickelten Isolationsschichten werden vorzugsweise bei einer Temperatur zwischen 60°C und 90°C vorgetrocknet. Um die Vorhärtung die Isolationsschichten zu beschleunigen, besteht die Möglichkeit, den Dorn selbst als Heizelement auszubilden und so von innen her die Isolationsschichten zusätzlich aufzuheizen. Die Vernetzung des Epoxidharzes kann zudem durch Zugabe eines UV-empfindlichen Aktivators beschleunigt werden. Dieser bewirkt nach Bestrahlung mit UV-Strahlung eine beschleunigte Selbstvernetzung des Epoxidharzes bei niedrigen Temperaturen. Der Aktivator wird bereits bei der Herstellung der Gießkeramikmischung zugesetzt. Die Menge beträgt 1 bis 2 Gew% bezogen auf die Gesamtmenge der verwendeten Gießkeramik. Danach bleibt das Material noch 1 bis 2 Stunden verarbeitungsfähig bevor die Härtung einsetzt. Um die Wirkung der Isolationsschicht zu erhöhen, besteht die Möglichkeit, Glimmer- oder Kunststoffolien in die Isolation einzubetten. Die hier beschriebenen Maßnahmen zur beschleunigten Aushärtung der Gießkeramik bzw. zur besseren Vernetzung des Epoxidharzes können auch bei allen anderen obenbeschriebenen Herstellungsverfahren angewendet werden, so weit es die Fertigung erlaubt.

## Patentansprüche

1. Verfahren zur Herstellung einer Gießkeramik aus Wasserglas und einem silizium- und aluminiumhaltigen Pulver, dadurch gekennzeichnet, daß 40 Gew% Wasserglas, das 25 Gew% K₂O und 16 Gew% SiO₂ sowie einen ph-Wert von 15 und eine Viskosität von 15 mPas aufweist und 60 Gew% eines Pulvers, das SiO₂ und Al₂O₃ sowie eine kristalline Na₂SiF₆-Phase mit einem Anteil von 20% enthält, 17 Gew% Epoxidharz auf der Basis von Bisphenol-A und 5 Gew% lösungsmittelfreies Silikonharz zugemischt werden, und daß die Gießkeramik zur Aushärtung und zur Vernetzung des Epoxidharzes 4 bis 5 Stunden lang einer ersten Wärmebehandlung bei 80°C bis 100°C und anschließend 8 bis 10 Stunden lang einer zweiten Wärmebehandlung bei 160° bis 200°C unterzogen wird.

2. Verfahren nach Anspruch 1, dadurch gekennzeichnet, daß der noch flüssigen Gießkeramik Oxidkeramiken in Form von Aluminiumdioxid, Zirkoniumdioxid, Magnesiumoxid, Siliziumdioxid oder Berylliumoxid sowie Nichtoxidpulver in Form von Aluminiumnitrid, Siliziumnitrid, Siliziumcarbid, Wolframcarbid, Borcarbid, Titancarbid oder Molybdäncarbid mit einer mittleren Korngröße zwischen 1 und 500 µm als Füllstoffe beigemischt werden.

3. Verfahren nach einem der Ansprüche 1 oder 2, dadurch gekennzeichnet, daß der noch flüssigen Gießkeramik Füllstoffe in Form von Kurzfasern aus Glas, Aluminiumdioxid, Siliziumdioxid, Kohlenstoff oder Siliziumcarbid beigemischt werden, deren Länge 0,15 bis 50 mm beträgt.

4. Verfahren nach einem der Ansprüche 1 bis 3, dadurch gekennzeichnet, daß zu verbesserten Verarbeitbarkeit der Gießkeramik dieser wenigstens ein mehrwertiger Alkohol in Form von Glyzerin beigemischt wird.

## Claims

1. Process for producing a casting ceramic comprising water glass and a powder containing silicon and aluminium, characterized in that 40% by weight of water glass which contains 25% by weight of K₂O and 16% by weight of SiO₂ and has a pH of 15 and a viscosity of 15 mPas and 60% by weight of a powder containing SiO₂ and Al₂O₃ and also a crystalline Na₂SiF₆ phase in a proportion of 20%, 17% by weight of epoxy resin based on bisphenol A and 5% by weight of solvent-free silicone resin are mixed in, and in that the casting ceramic is, to cure it and to cross-link the epoxy resin, subjected for from 4 to 5 hours to a first heat treatment at from 80°C to 100°C and subsequently subjected for from 8 to 10 hours to a second heat treatment at from 160° to 200°C.

2. Process according to Claim 1, characterized in that oxide ceramics in the form of aluminium dioxide [sic], zirconium dioxide, magnesium oxide, silicon dioxide or beryllium oxide, or non-oxide powders in the form of aluminium nitride, silicon nitride, silicon carbide, tungsten carbide, boron carbide, titanium carbide or molybdenum carbide having an average particle size between 1 and 500 µm are mixed into the still-liquid casting ceramic as fillers.

3. Process according to either Claim 1 or 2, characterized in that fillers in the form of short fibres of glass, aluminium dioxide [sic], silicon dioxide, carbon or silicon carbide having a length of from 0.15 to 50 mm are mixed into the still-liquid casting ceramic.

4. Process according to any of Claims 1 to 3, characterized in that, to improve the processability of the casting ceramic, at least one polyhydric alcohol in the form of glycerol is mixed into the casting ceramic.

## Revendications

1. Procédé de fabrication d'une céramique coulable à partir de verte soluble et d'une poudre contenant du silicium et de l'aluminium, caractérisé par le fait que l'on ajoute à 40 % en poids de verte soluble, contenant 25 % en poids K₂0 et 16 % en poids SiO₂ et présentant un pH de 15 et une viscosité de 15 mPas, et à 60 % en poids d'une poudre contenant du SiO₂ et du Al₂O₃ ainsi qu'une phase Na₂SiF₆ cristalline en une proportion de 20 %, 17 % enpoids de résine époxide à base de bisphénol-A et 5 % en poids de résine silicone sans solvant et par le fait qu'à des fins de durcissement et de réticulation de la céramique, on soumet la céramique coulable pendant 4 à 5 heures à un premier traitement thermique sous une température allant de 80 °C à 100 °C puis pendant 8 à 10 heures à un second traitement thermique sous une température allant de 160 à 200 °C.

2. Procédé selon la revendication 1, caractérisé par le fait que l'on ajoute à la céramique coulable encore à l'état liquide des céramiques oxydées sous la forme de dioxyde d'aluminium, de dioxyde de zirconium, d'oxyde de magnésium, de dioxyde de silicium, ou d'oxyde de beryllium ainsi que de la poudre non oxydée sous la forme de nitrure d'aluminium, de nitrure de silicium, de carbure de silicium, de carbure de tungstène, de carbure de bore, de carbure de titane ou de carbure de molybdène avec une dimension moyenne de grains comprise entre 1 et 500 µm en tant que charges.

3. Procédé selon l'une des revendications 1 ou 2, caractérisé par le fait que l'on ajoute à la céramique coulable encore à l'état liquide des charges sous la forme de fibres courtes de vertes, de dioxyde d'aluminium, de dioxyde de silicium, de carbone ou de carbure de silicium, dont la longueur est comprise dans une plage allant de 0,15 à 50 mm.

4. Procédé selon l'une des revendications 1 à 3, caractérisé par le fait que pour obtenir une meilleure usinabilité de la céramique coulable on ajoute à celle-ci un polyalcool sous la forme de glycérine.
